# EUROPÄISCHE PATENTSCHRIFT

(11) **EP 3 680 595 B1**
(45) Veröffentlichungstag und Bekanntmachung des Hinweises auf die Patenterteilung: **13.10.2021**
(21) Anmeldenummer: 19216572.8
(22) Anmeldetag: 16.12.2019
(51) Int. Cl.: F28D 20/00

(54) **VERFAHREN UND VORRICHTUNG ZUR BELADUNG UND ENTLADUNG EINES THERMOCHEMISCHEN WÄRMESPEICHER-MEDIUMS SOWIE SCHNECKENFÖRDERER ZUM BELADEN DES THERMOCHEMISCHEN WÄRMESPEICHER-MEDIUMS**
METHOD AND DEVICE FOR LOADING AND DISCHARGING A THERMOCHEMICAL HEAT STORAGE MEDIUM AND SCREW CONVEYOR FOR LOADING THE THERMOCHEMICAL HEAT STORAGE MEDIUM
PROCÉDÉ ET DISPOSITIF DE CHARGE ET DE DÉCHARGE D'UN MILIEU D'ACCUMULATEUR DE CHALEUR THERMIQUE-CHIMIQUE AINSI QUE TRANSPORTEUR À VIS PERMETTANT DE CHARGER LE MILIEU D'ACCUMULATEUR DE CHALEUR

(30) Priorität: 17.12.2018 DE 102018132467
(43) Veröffentlichungstag der Anmeldung: 15.07.2020
(73) Patentinhaber: Elmess Thermosystemtechnik GmbH & Co. KG, 29525 Uelzen (DE)
(72) Erfinder: Dreyer, Hartmut, 29525 Uelzen (DE)
(74) Vertreter: Hofmeister, Frank

(56) Entgegenhaltungen:
- WO-A1-2017/125452
- WO-A2-2011/054676
- CN-U- 203 959 182
- US-A- 3 955 554
- US-A1- 2014 298 822

## Beschreibung

Die Erfindung betrifft ein Verfahren zur Beladung und Entladung eines thermochemischen Wärmespeicher-Mediums, wobei bei der Beladung des WärmespeicherMediums ein Wärmestrom an das Wärmespeicher-Medium übertragen wird und dabei ein Reaktionsmedium von dem Wärmespeicher-Medium freigesetzt wird und wobei bei der Entladung des Wärmespeicher-Mediums das bei der Beladung freigesetzte Reaktionsmedium dem Wärmespeicher-Medium zugeführt wird und ein dabei freigesetzter Wärmestrom aus dem Wärmespeicher-Medium abgeführt wird, wobei das Wärmespeicher-Medium zum Beladen und Entladen zwischen zwei Vorratsbehältern hin und her gefördert wird. Weiterhin betrifft die Erfindung eine Belade- und Entladevorrichtung zur Durchführung des Verfahrens.

Aus der EP 2 536 993 B1 ist ein Verfahren zur Beladung und Entladung eines thermochemischen Wärmespeicher-Mediums bekannt, wobei bei dem bekannten Verfahren ein Arbeitsfluid kontaktlos zum Wärmespeicher-Medium geführt wird und die Zufuhr des Wärmestroms beim Beladen des Wärmespeicher-Mediums und die Abfuhr des Wärmestroms beim Entladen des Wärmespeicher-Mediums über das Arbeitsfluid erfolgt. Das Wärmespeicher-Medium ist bei dem bekannten Verfahren in einem von Wärmetauscherrohren für das Arbeitsfluid durchzogenen Wärmespeicher angeordnet.

Dieses bekannte Verfahren hat sich in der Praxis als durchaus geeignetes Verfahren zum Beladen und Entladen eines Wärmespeicher-Mediums erwiesen, jedoch hat sich die bekannte Verfahrensanordnung als relativ träge herausgestellt, so dass es viel Zeit in Anspruch nimmt, bis das im Wärmespeicher angeordnete Wärmespeicher-Medium vollständig beladen oder aber wieder vollständig entladen ist.

Ein gattungsgemäßes Verfahren ist aus der WO 2011/054676 A2 bekannt. Bei diesem Bekannten Verfahren werden das zu beladende Wärmespeichermedium Calciumoxid bzw. das zu entladende Wärmespeichermedium Calciumhydroxid über eine Leitung zwischen zwei Feststoffspeichern hin- und hergefördert, wobei der eigentliche Belade- bzw. Entladeprozess in einem separaten Reaktionsraum erfolgt. Nachteilig an diesem bekannten Verfahren ist neben der Verwendung eines separaten Reaktionsraums zur Durchführung des Belade- bzw. Entladeprozesses auch die Verwendung nur einer Leitung zwischen den Feststoffspeichern, wodurch der Prozess immer nur in eine Richtung, das heißt entweder Beladeprozess oder Entladeprozess ablaufen kann.

Weiterhin ist aus der US 2014/0298822 A1 ein Verfahren zur Energiespeicherung bekannt, bei dem ein als Wärmespeicher-Medium dienendes Metalloxid aus einem ersten Vorratsbehälter über eine in einen Reaktionsraum gefördert wird, in dem mittels konzentrierter Sonnenenergie das Metalloxid unter Abspaltung von Sauerstoff einem Reduktionsprozess unterzogen wird. Das reduzierte Metall wird anschließend in einen zweiten Vorratsbehälter verbracht.

Zum Freisetzen der gespeicherten Energie wird das reduzierte Metall über eine Förderstrecke in einen Fließbett-Wärmetauscher gefördert, in den gleichzeitig der im Reduktionsprozess freigesetzte Sauerstoff über eine Pumpe eingespeist wird. Durch die Zufuhr des Sauerstoffs wird das Metall im Fließbett-Wärmetauscher unter Wärmeabgabe zu Metalloxid oxidiert. An den Fließbett-Wärmetauscher schließt sich ein Zyklon an, in dem überschüssiges Gas von dem Metalloxid abgetrennt wird. Nachteilig an diesem bekannten Verfahren ist wiederum der hohe apparative Aufwand mit zusätzlichem Reaktionsraum, Fließbett-Wärmetauscher und Zyklon.

Die US 3 955 554 A offenbart ein Solar-Heizsystem mit dem Wämespeichermedium Calciumoxid bzw. Calciumhydroxid. Bei diesem bekannten Heizsystem wird das beladene Wärmespeichermedium Calciumoxid mittels eines Schneckenförderers in eine mit Wasser gefüllte Kammer gefördert, in der beim Zusammentreffen des beladenen Wärmespeichermediums Calciumoxid mit dem Wasser das Wämespeichermedium unter Abgabe eines Wärmestroms zu Calciumhydroxid entladen wird. Die an das Wasser abgegebene Wärmemenge wird über einen Wäremtauscher abgeführt.

Das entladene Wärmespeichermedium Calciumhydroxid sammelt sich am Boden der Wasserkammer und wird mittels eines Schneckenförderers aus der Kammer entfernt und über eine Abtropfkammer sowie eine Vorheizkammer in die solarbetriebene Heizkammer gefördert, in der dem Calciumhydroxid zum Beladen ein Wärmestrom zugeführt und das Reaktionsmedium Wasser aus der Heizkammer entfernt wird. Nachteilig an diesem bekannten Verfahren ist wiederum der hohe apparative Aufwand mit zusätzlichem Wassertank, Abtropfkammer sowie Vorheizund Heizkammer.

Ein weiteres Verfahren ist aus der DE 10 2016 200 921 A1 bekannt. Bei diesem bekannten Verfahren wird das Wärmespeicher-Medium über einen Wärmetauscher-Schneckenförderer zwischen zwei Vorratsbehältern hin und her gefördert. Zum Beladen wird das Wärmespeicher-Medium im Wärmetauscher-Medium vorgewärmt und anschließend einer separaten Regenerationsvorrichtung zugeführt, in der das Wärmespeicher-Medium so hoch erhitzt wird, bis sich das Reaktionsmedium vom Wärmespeicher-Medium trennt.

Nachteilig an diesem bekannten Verfahren ist der apparative Aufwand für den erforderlichen separaten Regenerationsvorrichtung zusätzlich zum Wärmetauscher-Schneckenförderer. Weiterhin erlaubt die bekannte Vorrichtung nur den Betrieb im Belade- oder Entlademodus.

Um das Beladen und Entladen des Wärmespeicher-Mediums zu beschleunigen, ist es aus der Praxis weiterhin bekannt, bei dem vorgenannten Verfahren den Wärmespeicher als Wirbelstromreaktor auszulegen. Diese Ausgestaltung des Wärmespeichers ermöglicht zwar eine bessere und somit schnellere Wärmeübertragung an das Wärmespeicher-Medium bzw. fort vom Wärmespeicher-Medium, jedoch ist der apparative und steuerungstechnische Aufwand zum Betrieb des Wirbelstromreaktors sehr hoch.

Davon ausgehend liegt der Erfindung die **Aufgabe** zugrunde, ein Verfahren zur Beladung und Entladung eines thermochemischen Wärmespeicher-Mediums zu schaffen, bei dem das Beladen und Entladen des Wärmespeicher-Mediums schnell und effizient erfolgt.

Die **Lösung** dieser Aufgabenstellung ist erfindungsgemäß gekennzeichnet durch die Verfahrensschritte:
- Bereitstellen des entladenen Wärmespeicher-Mediums in einem ersten Vorratsbehälter;
- Fördern des entladenen Wärmespeicher-Mediums entlang einer ersten, als mechanischer Schneckenförderer ausgebildeten Förderstrecke vom ersten Vorratsbehälter hin zu einem zweiten Vorratsbehälter und
- Beladen des entladenen Wärmespeicher-Mediums entlang der ersten, als mechanischer Schneckenförderer ausgebildeten Förderstrecke durch Zuführen des Wärmestrom mittels einer elektrischen Heizeinrichtung unter gleichzeitigem vollständigen Entfernen des Reaktionsmediums aus dem nunmehr beladenen Wärmespeicher-Medium;
- Befüllen des zweiten Vorratsbehälters mit dem entlang der ersten, als mechanischer Schneckenförderer ausgebildeten Förderstrecke beladenen Wärmespeicher-Medium;
- Fördern des beladenen Wärmespeicher-Mediums entlang einer zweiten, als mechanischer Schneckenförderer ausgebildeten Förderstrecke vom zweiten Vorratsbehälter zurück zum ersten Vorratsbehälter und
- Entladen des beladenen Wärmespeicher-Mediums entlang der zweiten, als mechanischer Schneckenförderer ausgebildeten Förderstrecke durch Zuführen des beim Beladen entfernten Reaktionsmediums unter gleichzeitiger Freisetzung und Abführung des Wärmestroms mittels eines Wärmeüberträger-Mediums;
- Befüllen des ersten Vorratsbehälters mit dem entlang der zweiten, als mechanischer Schneckenförderer ausgebildeten Förderstrecke entladenen Wärmespeicher-Medium.

Durch das elektrische Erhitzen des Wärmespeicher-Mediums während des Transports entlang der ersten, als mechanischer Schneckenförderer ausgebildeten Förderstrecke ist es möglich, das Wärmespeicher-Medium direkt so hoch zu erhitzen, dass das Reaktionsmedium vollständig aus dem Wärmespeicher-Medium entfernt wird und es keiner Weiterbearbeitung des Wärmespeicher-Mediums bedarf, um dieses vom entladenen in den beladenen Zustand zu überführen.

Dadurch, dass das Reaktionsmedium aufgrund der elektrischen Beizung der Beladungs-Förderstrecke vollständig vom Wärmespeicher-Medium abgetrennt werden kann, bedarf es beim erfindungsgemäßen Verfahren keiner separaten Regenerationsvorrichtung, wie diese aus dem Stand der Technik bekannt ist.

Weiterhin vorteilhaft am erfindungsgemäßen Verfahren ist die Verwendung zweier separater, als mechanische Schneckenförderer ausgebildeter Förderstrecken zum Beladen und Entladen des Wärmespeicher-Mediums. Die Verwendung separater, als mechanische Schneckenförderer ausgebildeter Förderstrecken für das Beladen und Entladen des Wärmespeicher-Mediums erhöht die Flexibilität des Verfahrens, da die Prozesse ohne Zeitverlust hintereinander oder sogar parallel fahrbar sind. Darüber hinaus erleichtert die Trennung der Förderstrecken auch die individuelle Einstellung verschiedener Verfahrensparameter beim Beladen oder Entladen des Wärmespeicher-Mediums.

Mechanische Förderer für Schüttgüter, wie beispielsweise Calciumhydroxid, zeichnen sich dadurch aus, dass diese in der Anschaffung und Wartung kostengünstig sind.

Die Flexibilität des erfindungsgemäßen Verfahrens kann weiterhin dadurch erhöht werden, dass das Wärmespeicher-Medium kontinuierlich oder diskontinuierlich zwischen den mindestens zwei Vorratsbehältern hin und her gefördert wird.

Um Verunreinigungen des Wärmespeicher-Mediums zu vermeiden und den Belade- und Endladeprozess möglichst günstig und wartungsarm zu gestalten, wird mit der Erfindung weiterhin vorgeschlagen, dass das beim Beladen des Wärmespeicher-Mediums freigesetzte Reaktionsmedium und das beim Entladen des Wärmespeicher-Mediums wieder zugeführte Reaktionsmedium in einem geschlossenen Kreislauf geführt werden.

Gemäß einer praktischen Ausführungsform der Erfindung wird vorgeschlagen, dass entlang der mindestens einen, als mechanischer Schneckenförderer ausgebildeten Förderstrecke für das Beladen und Entladen des WärmespeicherMediums unterschiedliche Verfahrensparameter, wie beispielsweise unterschiedliche Druckniveaus, eingestellt werden können. Insbesondere bei der Verwendung separater, als mechanische Schneckenförderer ausgebildeter Förderstrecken für das Beladen und Entladen des Wärmespeicher-Mediums ist es möglich, die jeweils bestmöglichen Prozessbedingungen einzustellen, um den Beladungs- und Entladungsprozess zu optimieren.

Schließlich wird mit der Erfindung vorgeschlagen, dass als WärmespeicherMedium Calciumhydroxid verwendet wird. Calciumhydroxid zeichnet sich dadurch aus, dass es einerseits sehr günstig zu beschaffen ist und andererseits aufgrund der Alkalinität und des Fehlens von Halogenid-Atomen hervorragend mit hochtemperaturfesten und preiswerten Kohlenstoff-Stählen verträglich ist, so dass auf die Verwendung teurer hochlegierter Stähle verzichtet werden kann.

Eine Belade- und Entladevorrichtung für ein thermochemischen WärmespeicherMediums zur Durchführung des erfindungsgemäßen Verfahren zeichnet sich erfindungsgemäß aus durch mindestens einen Vorratsbehälter für das entladene Wärmespeicher-Medium und mindestens einen weiteren Vorratsbehälter für das beladene Wärmespeicher-Medium, wobei jeweils ein Vorratsbehälter für das entladene Wärmespeicher-Medium und ein Vorratsbehälter für das beladene Wärmespeicher-Medium über zwei separate, als mechanische Schneckenförderer ausgebildete Förderstrecken unmittelbar miteinander verbunden sind, wobei das Beladen des entladenen Wärmespeicher-Mediums aus dem Vorratsbehälter beim Transport entlang der ersten, als mechanischer Schneckenförderer ausgebildeten Förderstrecke hin zum Vorratsbehälter durch Aufheizen des entladenen WärmespeicherMediums mittels einer elektrischen Heizeinrichtung mit dem Wärmestrom bei gleichzeitiger vollständiger Entfernung des Reaktionsmediums erfolgt und wobei das Entladen des beladenen Wärmespeicher-Medium aus dem Vorratsbehälter beim Transport entlang der zweiten, als mechanischer Schneckenförderer ausgebildeten Förderstrecke hin zum Vorratsbehälter durch Zugabe des beim Beladen freigesetzten Reaktionsmediums zum beladenen Wärmespeicher-Medium unter gleichzeitiger Freisetzung des Wärmestroms erfolgt.

Weiterhin wird mit der Erfindung vorgeschlagen, dass die elektrische Heizeinrichtung ein elektrisch beheizter Schneckenförderer ist.

Zur Ausbildung der elektrischen Heizeinrichtung wird erfindungsgemäß vorgeschlagen, dass die elektrisch beheizbare Förderschnecke eine um ihre Längsachse rotierbar gelagerte elektrische Heizpatrone mit einem zylindrischen Gehäuse aufweist, wobei auf der äußeren Mantelfläche des Gehäuses mindestens ein in Richtung der Längsachse wendelförmig verlaufendes Streifenelement zur Ausbildung der Förderschnecke angeordnet ist.

Durch die Verwendung der elektrischen Heizpatrone als Seele der Förderschnecke beim Beladeprozess des Wärmespeicher-Mediums ist es auf einfache Art und Weise möglich, die ausreichend hohe Temperatur bereit zu stellen, um während des Transports des Wärmespeicher-Mediums entlang der Förderstrecke das Reaktionsmedium vollständig vom Wärmespeicher-Medium zu trennen.

Um die Wärmeübertragung von der Heizpatrone auf das Wärmespeicher-Medium zu verbessern und eine gleichmäßige Wärmeübertragung und Durchmischung sicher zu stellen, wird mit der Erfindung vorgeschlagen, dass das mindestens eine Streifenelement aus einem gut wärmeleitenden Material besteht.

Um die Förderung des Wärmespeicher-Mediums entlang der Förderstrecken zu optimieren, wird mit einer praktischen Ausführungsform der Erfindung vorgeschlagen, dass mindestens eine der als mechanische Schneckenförderer ausgebildeten Förderstrecken aus mindestens zwei in Reihe hintereinander geschalteten, als mechanische Schneckenförderer ausgebildeten Teilförderstrecken besteht.

Weitere Merkmale und Vorteile der Erfindung ergeben sich anhand der zugehörigen Zeichnungen, in denen zwei Ausführungsbeispiele einer erfindungsgemäßen Vorrichtung zur Durchführung des erfindungsgemäßen Verfahrens zur Beladung und Entladung eines thermochemischen Wärmespeicher-Mediums nur beispielhaft dargestellt sind, ohne die Erfindung auf diese Ausführungsbeispiele zu beschränken. In den Zeichnungen zeigt:
- Fig. 1: eine schematische Seitenansicht einer ersten Ausführungsform einer erfindungsgemäßen Vorrichtung zur Durchführung des erfindungsgemäßen Verfahrens;
- Fig. 2: eine schematische Draufsicht auf die Vorrichtung gemäß Fig. 1;
- Fig. 3 .: eine schematische Seitenansicht eines erfindungsgemäßen Schneckenförderers und
- Fig. 4: eine schematische Ansicht gemäß Fig. 1, jedoch eine zweite Ausführungsform einer erfindungsgemäßen Vorrichtung darstellend.

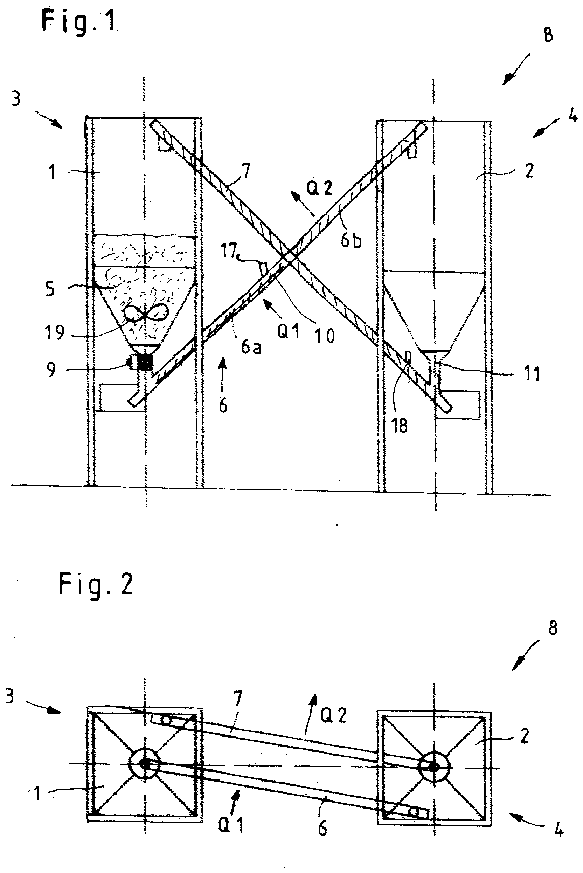

Die Abbildungen Fig. 1, 2 und 4 zeigen eine Vorrichtungen zur Durchführung eines Verfahrens zur Beladung und Entladung eines thermochemischen WärmespeicherMediums.

Die in den Abbildungen Fig. 1, 2 und 4 dargestellten Vorrichtungen bestehen im Wesentlichen aus zwei als Silos 1 und 2 ausgebildeten Vorratsbehältern 3 und 4 zur lagernden Aufnahme eines Wärmespeicher-Mediums 5.

Die beiden Vorratsbehälter 3 und 4 sind über zwei Förderstrecken 6 und 7 so miteinander verbunden, dass über die Förderstrecke 6 das Wärmespeicher-Medium 5 vom Vorratsbehälter 3 zum Vorratsbehälter 4 gefördert werden kann und umgekehrt über die Förderstrecke 7 das Wärmespeicher-Medium 5 vom Vorratsbehälter 7 wieder zurück zum Vorratsbehälter 6 gefördert werden kann.

Die zuvor im konstruktiven Aufbau beschriebene, in einem geschlossenen System arbeitende Vorrichtung bildet bei einem Verfahren zur Beladung und Entladung eines thermochemischen Wärmespeicher-Mediums 5 einen Wärmespeicher 8.

In den Abbildungen Fig. 1, 2 und 4 sind die Vorratsbehälter 3 und 4 nur exemplarisch als Silos 1 und 2, insbesondere Kunststoff-Silos dargestellt. Die Vorratsbehälter 3 und 4 können jede beliebige Form aufweisen und aus den verschiedensten Materialien bestehen, sofern die Form eine Lagerung und Ausgabe des in dem jeweiligen Vorratsbehälter 3, 4 aufzunehmenden Wärmespeicher-Mediums 5 ermöglicht und die Materialauswahl zur Ausbildung der Vorratsbehälter 3, 4 mit dem jeweiligen Wärmespeicher-Medium 5 verträglich ist.

Bei dem Verfahren zur Beladung und Entladung des thermochemischen Wärmespeicher-Mediums 5, wird bei der Beladung des Wärmespeicher-Mediums 5 ein Wärmestrom Q1 an das Wärmespeicher-Mediums 5 übertragen, wobei ein Reaktionsmedium von dem Wärmespeicher-Mediums 5 freigesetzt wird.

Dahingegen wird bei der Entladung des Wärmespeicher-Mediums 5 das bei der Beladung freigesetzte Reaktionsmeium unter Wärmefreisetzung dem Wärmespeicher-Medium 5 wieder zugeführt und ein Wärmestrom Q2 aus dem Wärmespeicher-Medium 5 abgeführt.

Als Wärmespeicher-Medium 5 kann beispielsweise Calciumhydroxid Ca(OH)₂ verwendet wird. Calciumhydroxid zeichnet sich dadurch aus, dass es einerseits sehr günstig zu beschaffen ist und andererseits aufgrund der Alkalinität und des Fehlens von Halogenid-Atomen hervorragend mit hochtemperaturfesten und preiswerten Kohlenstoff-Stählen verträglich ist, so dass auf die Verwendung teurer hochlegierter Stähle beim Aufbau des Wärmespeichers 8 verzichtet werden kann.

Alternativ zur Verwendung von Calciumhydroxid Ca(OH)₂ als WärmespeicherMedium 5 lassen sich beispielsweise auch Magnesiumsulfat MgSO₄, Strontiumbromid SrBr₂ oder Magnesiumchlorid MgCl₂ als thermochemische Wärmespeicher-Medien verwenden.

Das Prinzip des Wärmespeichers 8 beruht auf der reversiblen Speicherung von Wärme mithilfe der Reaktion von Calciumhydroxid zu Calciumoxid und Wasser nach der Reaktionsgleichung:

Ca(OH)₂ + Wärme ↔ CaO + H₂O.

Nachfolgend wird der Prozess der reversiblen Wärmespeicherung mittels des Wärmespeicher-Mediums 5 Calciumhydroxid anhand des in den Abbildungen Fig. 1 und 2 dargestellten Wärmespeichers 8 beschrieben.

Zu Beginn wird der beispielsweise als Kunststoff-Silo 1 ausgebildete Vorratsbehälter 3 mit dem Wärmespeicher-Medium 5 Calciumhydroxid befüllt, während das Kunststoff-Silo 2 des zweiten Vorratsbehälters 4 zu Beginn des Prozesses leer ist.

Über eine Dosiereinrichtung 9, beispielsweise eine Zellradschleuse oder eine Zuführschnecke, wird das Wärmespeicher-Medium 5 Calciumhydroxid in die Förderstrecke 6 eingespeist, die die Vorratsbehälter 3 und 4 miteinander verbindet.

Entlang der Förderstrecke 6 wird dem Wärmespeicher-Medium 5 Calciumhydroxid mittels einer elektrischen Heizeinrichtung 10 der Wärmestrom Q1 zugeführt und das Wärmespeicher-Medium 5 Calciumhydroxid unter vollständiger Abgabe des Reaktionsmediums Wasser mit Energie beladen und entsprechend der nachfolgenden Reaktion zu Calciumoxid gebrannt

Ca(OH)₂ + Wärme → CaO + H₂O.

Der Wärmestrom Q1 zum Betrieb der elektrischen Heizeinrichtung 10 und somit zum Beladen des Wärmespeicher-Mediums 5 kann beispielsweise mittels einer nicht dargestellten Photovoltaikanlage oder aber auch jeder andersartigen Energiequelleerzeugt werden.

Das so mit Energie beladene, zu Calciumoxid gebrannte Wärmespeicher-Medium 5 wird am Ende der Förderstrecke 6 in den zweiten Vorratsbehälter 4 gefördert.

Wenn nun Wärme benötigt wird, wird das im Vorratsbehälter 4 befindliche beladene Wärmespeicher-Medium 5 zum Entladen freigegeben. Hierzu wird das beladene Wärmespeicher-Medium 5 Calciumoxid über eine Dosiereinrichtung 11, beispielsweise einen elektrisch gesteuerten Schieber oder eine Zuführschnecke, in die Förderstrecke 7 eingespeist, die die Vorratsbehälter 4 und 3 miteinander verbindet.

Entlang der Förderstrecke 7 wird dem beladenen Wärmespeicher-Medium 5 Calciumoxid das Reaktionsmedium Wasser zugegeben und das beladene Wärmespeicher-Medium 5 Calciumoxid unter Freisetzung des Wärmestroms Q2 entladen und gemäß der nachfolgenden Reaktion zu Calciumhydroxid gelöscht

CaO + H₂O → Ca(OH)₂ + Wärme.

Der bei der Entladung frei werdende Wärmestrom Q2 wird vorzugsweise mittels eines nicht dargestellten Wärmetauschers abgeführt und lässt sich beispielsweise zum Heizen von Wohnräumen und/oder zum Aufheizen von Brauchwasser nutzen.

Das so entladene, wieder zu Calciumhydroxid gelöschte Wärmespeicher-Medium 5 wird am Ende der Förderstrecke 7 zurück in den ersten Vorratsbehälter 3 gefördert.

Die Einspeisung des Wärmespeicher-Mediums 5 in die Förderstrecken 6 und 7 kann sowohl kontinuierlich als auch diskontinuierlich erfolgen.

Um Verunreinigungen des Wärmespeicher-Mediums 5, insbesondere durch das beim Entladen zuzuführende Reaktionsmedium, zu vermeiden und den Beladeund Endladeprozess möglichst günstig und wartungsarm zu gestalten, wird das beim Beladen des Wärmespeicher-Mediums 5 freigesetzte Reaktionsmedium Wasser und das beim Entladen des Wärmespeicher-Mediums 5 wieder zugeführte Reaktionsmedium Wasser in einem geschlossenen Kreislauf geführt.

Durch die Verwendung von zwei Vorratsbehältern 3 und 4, zwischen denen das Wärmespeicher-Medium 5 zum Beladen und Entladen hin und her förderbar ist, ist es möglich, die beiden Prozesse des Beladens und Entladens des Wärmespeicher-Mediums 5 sowie die daraus erhaltenen beiden unterschiedlichen chemischen Zusammensetzungen des Wärmespeicher-Mediums 5, nämlich das entladene Calciumhydroxid und das beladene Calciumoxid, räumlich voneinander zu trennen, so dass es keine gegenseitige Beeinflussung geben kann.

Die Verlagerung der Prozesse des Beladens und Entladens des WärmespeicherMediums 5 hin auf die Förderstrecken 6 und 7 zwischen den zwei Vorratsbehältern 3 und 4 ermöglicht eine einfache und vielseitige Steuerung des Verfahrens, da sich in einem Vorratsbehälter 3 oder 4 immer nur beladenes oder aber unbeladenes Wärmespeicher-Medium 5 befindet und die Richtung des Transports des Wärmespeicher-Mediums 5 und somit die Wahl des gewünschten Prozessschrittes Beladen oder Entladen des Wärmespeicher-Mediums 5 frei wählbar ist.

Die Verwendung separater Förderstrecken 6 und 7 für das Beladen und Entladen des Wärmespeicher-Mediums 5 erhöht die Flexibilität des Verfahrens, da die Prozesse ohne Zeitverlust hintereinander oder sogar parallel fahrbar sind.

Durch die Verwendung separater Förderstrecken 6 und 7 für das Beladen und Entladen des Wärmespeicher-Mediums 5 ist es zudem möglich, entlang der Förderstrecken unterschiedliche Verfahrensparameter, wie beispielsweise unterschiedliche Druckniveaus, einzustellen, um den Beladungs- und Entladungsprozess zu optimieren.

So ist es beispielsweise möglich, zum Beladen des Wärmespeicher-Mediums 5 entlang der Förderstrecke 6 einen Unterdruck zu erzeugen, da sich so die zum Beladen bzw. zum Brennen des unbeladenen Wärmespeicher-Mediums 5 Calciumhydroxid zum beladenen Wärmespeicher-Medium 5 Calciumoxid erforderliche Temperatur von 580°C bei Umgebungsdruck auf 450°C bei einem Unterdruck von etwa 2 bis 100 Millibar senken lässt.

Ebenso kann es vorteilhaft sein, dass zum Entladen des Wärmespeicher-Mediums 5 entlang der Förderstrecke 7 ein Überdruck von etwa 2 bis 100 Millibar erzeugt wird, wodurch sich der Übergang des zugeführten Wassers an das zu entladende Wärmespeicher-Medium 5 Calciumoxid verbessern lässt.

Bei der in den Abbildungen Fig. 1 und 2 dargestellten Ausführungsform der Vorrichtung besteht die Förderstrecke 6 aus zwei geradlinig hintereinander angeordneten Teilförderstrecken 6a und 6b. Während entlang der ersten Teilförderstrecke 6a durch elektrische Beheizung der Förderschnecke das Reaktionsmedium Wasser vollständig vom entladenen Wärmespeicher-Medium 5 getrennt wird, dient die sich anschließende Teilförderstrecke 6b nur zum Weitertransport des nunmehr beladenen Wärmespeicher-Mediums 5 hin zum Vorratsbehälter 4. Entlang der zweiten Teilförderstrecke 6b kühlt sich das beladene Wärmespeicher-Medium 5 wieder so weit ab, dass es am Ende der Förderstrecke 6 mit einer Temperatur von weniger 100°C bedenkenlos in das Kunststoff-Silo 2 eingefüllt werden kann.

Die erforderliche Abkühlung des beladenen Wärmespeicher-Mediums 5 entlang der Teilförderstrecke 6b richtet sich allein nach der Temperaturverträglichkeit des Vorratsbehälters 4.

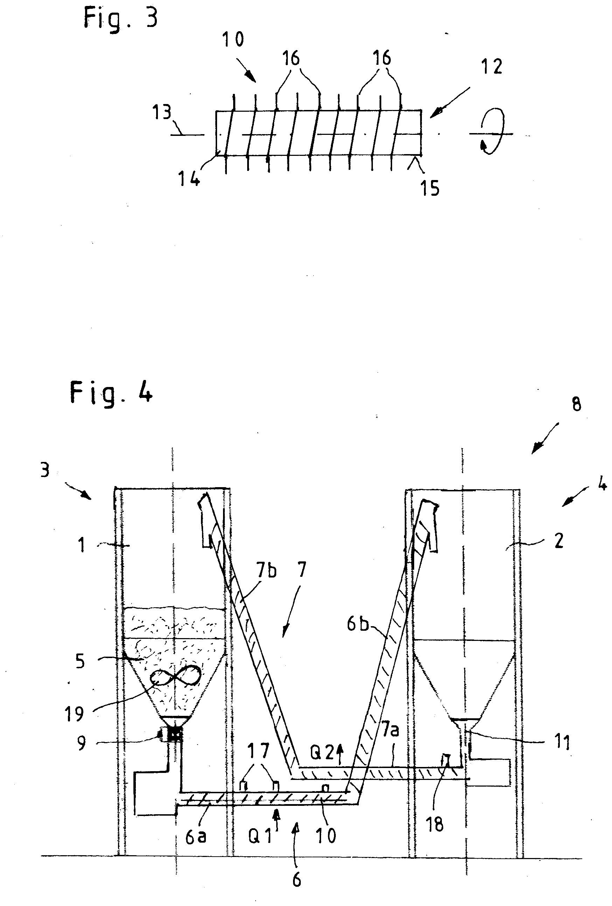

In Fig. 3 ist beispielhaft der Aufbau der Heizeinrichtung 10 zum Beladen des Wärmespeiche-Mediums 5 entlang der Förderstrecke 6 dargestellt. Wie aus der Abbildung ersichtlich, ist die Heizeinrichtung 10 als elektrisch beheizbare Förderschnecke 12 ausgebildet.

Die elektrisch beheizbare Förderschnecke 12 besteht dabei aus einer um ihre Längsachse 13 rotierbar gelagerte elektrische Heizpatrone 14 mit einem zylindrischen Gehäuse, wobei auf der äußeren Mantelfläche 15 des Gehäuses mindestens ein in Richtung der Längsachse 13 wendelförmig verlaufendes Streifenelement 16 zur Ausbildung der beheizbaren Förderschnecke 12 angeordnet ist. Die Steigung der durch das Streifenelement 16 gebildeten Förderschnecke kann je nach zu fördernder Menge des Wärmespeicher-Mediums 5 unterschiedlich ausgelegt werden.

Die Verwendung der elektrischen Heizpatrone 14 als Seele der beheizbaren Förderschnecke 12 beim Beladeprozess des Wärmespeicher-Mediums 5 ermöglicht es auf einfache Art und Weise die ausreichend hohe Temperatur bereit zu stellen, um während des Transports des Wärmespeicher-Mediums 5 entlang der Förderstrecke 6 das Reaktionsmedium Wasser vollständig vom Wärmespeicher-Medium 5 zu trennen.

Um die Wärmeübertragung von der Heizpatrone 14 auf das WärmespeicherMedium 5 zu verbessern und eine gleichmäßige Wärmeübertragung und Durchmischung sicher zu stellen, besteht das mindestens eine Streifenelement 16 aus einem gut wärmeleitenden Material besteht.

Ein wie zuvor beschrieben aufgebauter und betriebener Wärmespeicher 8 eignet sich beispielsweise als Wärmespeicher für Ein- oder Mehrfamilienhäuser zur Wärmeversorgung in der Übergangszeit. Die Energie zum Betrieb der elektrischen Heizeinrichtung 10 zum Beladen des Wärmespeicher-Mediums 5 lässt sich beispielsweise CO₂-neutral mittels einer Photovoltaikanlage oder Regelenergie (primär oder sekundär) erzeugen.

Das beladene Wärmespeicher-Medium 5 Calciumoxid kann Wärme über einen langen Zeitraum speichern und ist eine kostengünstige Alternative zu herkömmlichen Wärmespeicher-Anlagen.

Die beim Entladen des Wärmespeicher-Mediums 5 frei werdende Wärme lässt sich über einen nicht dargestellten Wärmetauscher zum Heizen eines Wohnraums oder zum Aufheizen des Brauchwassers nutzen.

Die Verwendung von Calciumhydroxid als Wärmespeicher-Medium 5 ermöglicht pro ca. 2m³ Wärmespeicher-Medium eine Speicherkapazität von etwa 1 MWh Wärme.

In Fig. 4 ist eine alternative Ausführungsform zur Ausbildung des zuvor beschriebenen Wärmespeichers 8 dargestellt. Während bei der in den Abbildungen Fig. 1 und 2 dargestellten Ausführungsform die Vorratsbehälter 3 und 4 jeweils über geradlinig angeordnete einteilige oder zweiteilige Förderstrecken 6 und 7 miteinander verbunden sind, die jeweils mit einer Steigung von 40° bis 50° vom unteren Ende des einen Vorratsbehälters 3 oder 4 zum oberen Ende des anderen Vorratsbehälters 4 oder 3 führen, bestehen bei der in Fig. 4 dargestellten Ausführungsform die Förderstrecken 6 und 7 aus jeweils zwei in Reihe hintereinander geschalteten Teilförderstrecken 6a und 6b bzw. 7a und 7b, wobei die Teilförderstrecken 6a und 6b sowie 7a und 7b nicht geradlinig zueinander ausgerichtet sind.

Die Förderstrecke 6 wird bei dieser Ausführungsform durch die horizontal angeordnete elektrisch beheizte Teilförderstrecke 6a mit dem über die Heizpatrone 14 elektrisch beheizten Schneckenförderer 12 zum Beladen des WärmespeicherMediums 5 und die nicht beheizte Teilförderstrecke 6b gebildet. Die mit einem Schneckenförderer ausgestattete Teilförderstrecke 6b dient dabei zum Transportieren des zuvor entlang der beheizten Teilförderstrecke 6a beladenen Wärmespeicher-Mediums 5 in den Vorratsbehälter 4. Das beim Erhitzen des unbeladenen Wärmespeicher-Mediums 5 als heißer Wasserdampf anfallende Reaktionsmedium kann über Dampfaustrittsöffnungen 17 aus der Teilförderstrecke 6a entweichen.

Die Handhabung des bei der elektrischen Beheizung des WärmespeicherMediums 5 abgetrennten dampfförmigen Reaktionsmediums Wasser ist bei der horizontalen Ausrichtung der Teilfördertrecke 6a einfach zu bewerkstelligen, da es hier im Gegensatz zur winkligen Anordnung der Teilförderstrecke 6a nicht zu einem Rückfluss auskondensierten Wassers innerhalb der Teilförderstrecke 6a kommen kann.

Zur Ausbildung des geschlossenen Kreislauf des Reaktionsmediums wird der Wasserdampf kondensiert und für eine spätere Verwendung als Reaktionsmedium Wasser für das Entladen des Wärmespeicher-Mediums 5 bereit gehalten.

Die Förderstrecke 7 wird bei dieser Ausführungsform durch die horizontal angeordnete Teilförderstrecke 7a zum Entladen des Wärmespeicher-Mediums 5 durch die Wiederzugabe des Reaktionsmediums Wasser und Teilförderstrecke 7b gebildet. Die mit einem Schneckenförderer ausgestattete Teilförderstrecke 7b dient dabei zum Transportieren des zuvor entlang der Teilförderstrecke 7a entladenen Wärmespeicher-Mediums 5 in den Vorratsbehälter 3. Das zum Entladen des beladenen Wärmespeicher-Mediums 5 dem Wärmespeicher-Medium 5 zuzuführende Reaktionsmedium wird als flüssiges Wasser über Einspeiseöffnungen 18 dem Wärmespeicher-Medium 5 in der Teilförderstrecke 7a zugegeben.

Alternativ zu der in Fig. 4 dargestellten Ausbildung der Förderstrecken 6 und 7 aus jeweils zwei Teilförderstrecken 6a, 6b und 7a, 7b ist es selbstverständlich auch möglich, mehr als zwei Teilförderstrecken je Förderstrecke oder aber auch keine, oder unterschiedlich viele Teilförderstrecken je Förderstrecke 6, 7 vorzusehen.

Um das Wärmespeicher-Medium 5 innerhalb der Vorratsbehälter 3 und 4 rieselfähig und somit auch dosierfähig zu halten, kann es erforderlich sein, in einem oder beiden Vorratsbehältern 3 und/oder 4 ein Rührwerk 19 vorzusehen, wie dies in den Abbildungen Fig. 1 und 4 bespielhaft für den Vorratsbehälter 3 dargestellt ist.

Auch wenn der zuvor beschriebene Wärmespeicher 8 nur zwei Vorratsbehälter 3 und 4 aufweist, zwischen denen das Wärmespeicher-Medium 5 hin und her förderbar ist, ist es selbstverständlich auch möglich, mehr als zwei Vorratsbehälter 3, 4 zu verwenden. Entscheidend ist, dass das Beladen und Entladen des Wärmespeicher-Mediums 5 außerhalb der Vorratsbehälter 3 und 4 auf den Förderstrecken 6 und 7 erfolgt, da nur so eine vielseitige und flexible Prozessführung möglich ist.

Die Energiebilanz des voranstehend beschriebenen Verfahrens lässt sich noch dadurch verbessern, dass unter anderem der beim Beladen des Wärmeträger-Mediums 5 Calciumhydroxid freigesetzte, heiße Wasserdampf genutzt wird, um Brauchwasser zu erwärmen.

Insgesamt zeichnet sich das zuvor beschriebene Verfahren dadurch aus, das es ein schnelles und effizientes Beladen und Entladen des Wärmespeicher-Mediums 5 ermöglicht.

### Bezugszeichenliste

- 1: Silo
- 2: Silo
- 3: Vorratsbehälter
- 4: Vorratsbehälter
- 5: Wärmespeicher-Medium
- 6: Förderstrecke
- 6a: Teilförderstrecke
- 6b: Teilförderstrecke
- 7: Förderstrecke
- 7a: Teilförderstrecke
- 7b: Teilförderstrecke
- 8: Wärmespeicher
- 9: Dosiereinrichtung
- 10: elektrische Heizeinrichtung
- 11: Dosiereinrichtung
- 12: beheizbare Förderschnecke
- 13: Längsachse
- 14: Heizpatrone
- 15: Mantelfläche
- 16: Streifenelement
- 17: Dampfaustrittsöffnung
- 18: Einspeiseöffnung
- 19: Rührwerk

- Q1: Wärmestrom (Beladen)
- Q2: Wärmestrom (Entladen)

## Patentansprüche

1. Verfahren zur Beladung und Entladung eines thermochemischen Wärmespeicher-Mediums, wobei bei der Beladung des Wärmespeicher-Mediums (5) ein Wärmestrom (Q1) an das Wärmespeicher-Mediums (5) übertragen wird und dabei ein Reaktionsmedium von dem Wärmespeicher-Mediums (5) freigesetzt wird und wobei bei der Entladung des Wärmespeicher-Mediums (5) das bei der Beladung freigesetzte Reaktionsmedium dem WärmespeicherMedium (5) zugeführt wird und ein dabei freigesetzter Wärmestrom (Q2) aus dem Wärmespeicher-Medium (5) abgeführt wird, wobei das WärmespeicherMedium (5) zum Beladen und Entladen zwischen zwei Vorratsbehältern (3, 4) hin und her gefördert wird,
**gekennzeichnet durch**
die Verfahrensschritte:
- Bereitstellen des entladenen Wärmespeicher-Mediums (5) in einem ersten Vorratsbehälter (3);
- Fördern des entladenen Wärmespeicher-Mediums (5) entlang einer ersten, als mechanischer Schneckenförderer ausgebildeten Förderstrecke (6) vom ersten Vorratsbehälter (3) hin zu einem zweiten Vorratsbehälter (4) und
- Beladen des entladenen Wärmespeicher-Mediums (5) entlang der ersten, als mechanischer Schneckenförderer ausgebildeten Förderstrecke (6) durch Zuführen des Wärmestrom (Q1) mittels einer elektrischen Heizeinrichtung (10) unter gleichzeitigem vollständigen Entfernen des Reaktionsmediums aus dem nunmehr beladenen Wärmespeicher-Medium (5);
- Befüllen des zweiten Vorratsbehälters (4) mit dem entlang der ersten, als mechanischer Schneckenförderer ausgebildeten Förderstrecke (6) beladenen Wärmespeicher-Medium (5);
- Fördern des beladenen Wärmespeicher-Mediums (5) entlang einer zweiten, als mechanischer Schneckenförderer ausgebildeten Förderstrecke (7) vom zweiten Vorratsbehälter (4) zurück zum ersten Vorratsbehälter (3) und
- Entladen des beladenen Wärmespeicher-Mediums (5) entlang der zweiten, als mechanischer Schneckenförderer ausgebildeten Förderstrecke (7) durch Zuführen des beim Beladen entfernten Reaktionsmediums unter gleichzeitiger Freisetzung und Abführung des Wärmestroms (Q2) mittels eines Wärmeüberträger-Mediums;
- Befüllen des ersten Vorratsbehälters (3) mit dem entlang der zweiten, als mechanischer Schneckenförderer ausgebildeten Förderstrecke (7) entladenen Wärmespeicher-Medium (5).

2. Verfahren nach Anspruch 1, **dadurch gekennzeichnet, dass** das Wärmespeicher-Medium (5) kontinuierlich oder diskontinuierlich zwischen den zwei Vorratsbehältern (3 und 4) hin und her gefördert wird.

3. Verfahren nach Anspruch 1 oder 2, **dadurch gekennzeichnet, dass** das beim Beladen des Wärmespeicher-Mediums (5) freigesetzte Reaktionsmedium und das beim Entladen des Wärmespeicher-Mediums (5) wieder zugeführte Reaktionsmedium in einem geschlossenen Kreislauf geführt werden.

4. Verfahren nach einem der Ansprüche 1 bis 3, **dadurch gekennzeichnet, dass** entlang der, als mechanische Schneckenförderer ausgebildeten Förderstrecken (6 oder 7) für das Beladen und Entladen des Wärmespeicher-Mediums (5) unterschiedliche Verfahrensparameter, wie beispielsweise unterschiedliche Druckniveaus, eingestellt werden können.

5. Verfahren nach einem der Ansprüche 1 bis 4, **dadurch gekennzeichnet, dass** als Wärmespeicher-Medium (5) Calciumhydroxid verwendet wird.

6. Belade - und Entladevorrichtung für ein thermochemisches WärmespeicherMedium zur Durchführung des Verfahrens nach einem der Ansprüche 1 bis 5,
**gekennzeichnet durch**
mindestens einen Vorratsbehälter (3) für das entladene WärmespeicherMedium (5) und mindestens einen weiteren Vorratsbehälter (4) für das beladene Wärmespeicher-Medium (5), wobei jeweils ein Vorratsbehälter (3) für das entladene Wärmespeicher-Medium (5) und ein Vorratsbehälter (4) für das beladene Wärmespeicher-Medium (5) über zwei separate, als mechanische Schneckenförderer ausgebildete Förderstrecken (6 und 7) unmittelbar miteinander verbunden sind, wobei das Beladen des entladenen WärmespeicherMediums (5) aus dem Vorratsbehälter (3) beim Transport entlang der ersten, als mechanischer Schneckenförderer ausgebildeten Förderstrecke (6) hin zum Vorratsbehälter (4) durch Aufheizen des entladenen WärmespeicherMediums (5) mittels einer elektrischen Heizeinrichtung (10) mit dem Wärmestrom (Q1) bei gleichzeitiger vollständiger Entfernung des Reaktionsmediums erfolgt und wobei das Entladen des beladenen Wärmespeicher-Medium (5) aus dem Vorratsbehälter (4) beim Transport entlang der zweiten, als mechanischer Schneckenförderer ausgebildeten Förderstrecke (7) hin zum Vorratsbehälter (3) durch Zugabe des beim Beladen freigesetzten Reaktionsmediums zum beladenen Wärmespeicher-Medium (5) unter gleichzeitiger Freisetzung des Wärmestroms (Q2) erfolgt.

7. Vorrichtung nach Anspruch 6, **dadurch gekennzeichnet, dass** die elektrische Heizeinrichtung (10) eine elektrisch beheizbare Förderschnecke (12) ist.

8. Vorrichtung nach Anspruch 7, **dadurch gekennzeichnet, dass** die elektrisch beheizbare Förderschnecke (12) eine um ihre Längsachse (13) rotierbar gelagerte elektrische Heizpatrone (14) mit einem zylindrischen Gehäuse aufweist, wobei auf der äußeren Mantelfläche (15) des Gehäuses mindestens ein in Richtung der Längsachse (13) wendelförmig verlaufendes Streifenelement (16) zur Ausbildung der Förderschnecke angeordnet ist.

9. Vorrichtung nach Anspruch 8, **dadurch gekennzeichnet, dass** das mindestens eine Streifenelement (16) aus einem wärmeleitenden Material besteht.

10. Vorrichtung nach einem der Ansprüche 6 bis 9, **dadurch gekennzeichnet, dass** mindestens eine der, als mechanische Schneckenförderer ausgebildeten Förderstrecken (6 oder 7) aus mindestens zwei in Reihe hintereinander geschalteten, als mechanische Schneckenförderer ausgebildeten Teilförderstrecken (6a, 6b oder 7a, 7b) besteht.

## Claims

1. Method for loading and discharging a thermal chemical heat storage medium, wherein, during the loading of the heat storage medium (5), a heat flow (Q1) is transmitted to the heat storage medium (5) and at the same time a reaction medium is released from the heat storage medium (5), and wherein during the discharging of the heat storage medium (5) the reaction medium released during loading is supplied to the heat storage medium (5) and a heat flow (Q2) released in this process is discharged from the heat storage medium (5), wherein for loading and discharging the heat storage medium (5) is conveyed back and forth between two reservoir vessels (3, 4),
**characterized by**
the method steps of:
- providing the unladen heat storage medium (5) in a first reservoir vessel (3);
- conveying the unladen heat storage medium (5) along a first conveying section (6), in the form of a mechanical screw conveyor, from the first reservoir vessel (3) to a second reservoir vessel (4), and
- loading the unladen heat storage medium (5) along the first conveying section (6), in the form of a mechanical screw conveyor, by supplying the heat flow (Q1) by means of an electrical heating device (10), with simultaneous complete removal of the reaction medium from the now laden heat storage medium (5);
- filling the second reservoir vessel (4) with the heat storage medium (5) laden along the first conveying section (6), in the form of a mechanical screw conveyor;
- conveying the laden heat storage medium (5) along a second conveying section (7), in the form of a mechanical screw conveyor, from the second reservoir vessel (4) back to the first reservoir vessel (3), and
- discharging the laden heat storage medium (5) along the second conveying section (7), in the form of a mechanical screw conveyor, by supplying the reaction medium removed during loading, with simultaneous release and discharge of the heat flow (Q2) by means of a heat transfer medium;
- filling the first reservoir vessel (3) with the heat storage medium (5) unladen along the second conveying section (7), in the form of a mechanical screw conveyor.

2. Method according to Claim 1, **characterized in that** the heat storage medium (5) is conveyed back and forth continuously or discontinuously between the two reservoir vessels (3 and 4).

3. Method according to Claim 1 or 2, **characterized in that** the reaction medium released during loading of the heat storage medium (5), and the reaction medium resupplied during discharging of the heat storage medium (5), are guided in a closed circuit.

4. Method according to any of Claims 1 to 3, **characterized in that** different method parameters, such as different pressure levels, for example, may be established along the conveying sections (6 or 7), in the form of mechanical screw conveyors, for the loading and discharging of the heat storage medium (5).

5. Method according to any of Claims 1 to 4, **characterized in that** calcium hydroxide is used as heat storage medium (5).

6. Loading and discharging apparatus for a thermochemical heat storage medium for implementing the method according to any of Claims 1 to 5,
**characterized by**
at least one reservoir vessel (3) for the unladen heat storage medium (5) and at least one further reservoir (4) for the laden heat storage medium (5), wherein in each case one reservoir vessel (3) for the unladen heat storage medium (5) and one reservoir vessel (4) for the laden heat storage medium (5) are connected directly to one another via two separate conveying sections (6 and 7), in the form of mechanical screw conveyors, wherein the loading of the unladen heat storage medium (5) from the reservoir vessel (3) takes place during transport along the first conveying section (6), in the form of a mechanical screw conveyor, to the reservoir vessel (4), by heating of the unladen heat storage medium (5) by means of an electrical heating device (10) with the heat flow (Q1), with complete removal of the reaction medium at the same time, and wherein the discharging of the laden heat storage medium (5) from the reservoir vessel (4) takes place during transport along the second conveying section (7), in the form of a mechanical screw conveyor, to the reservoir vessel (3) by addition of the reaction medium released during loading to the laden heat storage medium (5), with release of the heat flow (Q2) at the same time.

7. Apparatus according to Claim 6, **characterized in that** the electrical heating device (10) is an electrically heatable conveying screw (12).

8. Apparatus according to Claim 7, **characterized in that** the electrically heatable conveying screw (12) comprises an electric heating cartridge (14) which is mounted so as to be rotatable about its longitudinal axis (13) and which has a cylindrical housing, wherein at least one strip element (16) extending helically in the direction of the longitudinal axis (13) is disposed on the outer lateral face (15) of the housing so as to form the conveyor screw.

9. Apparatus according to Claim 8, **characterized in that** the at least one strip element (16) consists of a heat-conducting material.

10. Apparatus according to any of Claims 6 to 9, **characterized in that** at least one of the conveyor screws (6 or 7) in the form of mechanical screw conveyors consists of at least two partial conveyor sections (6a, 6b or 7a, 7b) which are connected in series one after another and which are in the form of mechanical screw conveyors.

## Revendications

1. Procédé de charge et de décharge d'un accumulateur de chaleur thermochimique, un flux de chaleur (Q1) étant transféré au milieu de stockage de chaleur (5), et un milieu réactionnel étant libéré du milieu de stockage de chaleur (5), pendant que le milieu de stockage de chaleur (5) se charge et le milieu réactionnel libéré pendant la charge étant envoyé au milieu de stockage de chaleur (5), et un flux de chaleur (Q2) alors libéré étant retiré du milieu de stockage de chaleur (5), pendant que le milieu de stockage de chaleur (5) se décharge, le milieu de stockage de chaleur (5) destiné à la charge et à la décharge étant transporté dans les deux sens entre deux réservoirs de stockage (3, 4),
le procédé étant **caractérisé par** les étapes suivantes :
- fournir le milieu de stockage de chaleur déchargé (5) dans un premier réservoir de stockage (3) ;
- transporter le milieu de stockage de chaleur déchargé (5) le long d'un premier chemin de transport (6) conçu comme un transporteur à vis mécanique du premier réservoir de stockage (3) à un deuxième réservoir de stockage (4) et
- charger le milieu de stockage de chaleur déchargé (5) le long du premier chemin de transport (6) conçu comme un transporteur à vis mécanique par un processus consistant à amener le flux de chaleur (Q1) au moyen d'une unité de chauffage électrique (10) tout en supprimant complètement le milieu réactionnel du milieu de stockage de chaleur maintenant chargé (5) ;
- remplir le deuxième réservoir de stockage (4) avec le milieu de stockage de chaleur chargé (5) le long du premier chemin de transport (6) conçu comme un transporteur à vis mécanique ;
- transporter le milieu de stockage de chaleur chargé (5) le long d'un deuxième chemin de transport (7) conçu comme un transporteur à vis mécanique du deuxième réservoir de stockage (4) au premier réservoir de stockage (3) et
- décharger le milieu de stockage de chaleur chargé (5) le long du deuxième chemin de transport (7) conçu comme un'transporteur à vis mécanique par un processus consistant à amener le milieu réactionnel retiré lors de la charge tout en libérant et évacuant simultanément le flux de chaleur (Q2) au moyen d'un milieu de transfert de chaleur ;
- remplir le premier réservoir de stockage (3) avec le milieu de stockage de chaleur déchargé (5) le long du deuxième chemin de transport (7) conçu comme un transporteur à vis mécanique.

2. Procédé selon la revendication 1, **caractérisé en ce que** le milieu de stockage de chaleur (5) est transporté de manière continue ou discontinue dans les deux sens entre les deux réservoirs de stockage (3 et 4) .

3. Procédé selon la revendication 1 ou 2, **caractérisé en ce que** le milieu réactionnel libéré lorsque le milieu de stockage de chaleur (5) se charge et le milieu réactionnel à nouveau amené lorsque le milieu de stockage de chaleur (5) se décharge sont guidés dans un circuit fermé.

4. Procédé selon l'une des revendications 1 à 3, **caractérisé en ce que** différents paramètres de procédé, tels que différents niveaux de pression, peuvent être réglés le long des chemins de transport (6 ou 7) conçus comme des transporteurs à vis mécaniques et destinés à la charge et la décharge du milieu de stockage de chaleur (5).

5. Procédé selon l'une des revendications 1 à 4, **caractérisé en ce que** de l'hydroxyde de calcium est utilisé comme milieu de stockage de chaleur (5).

6. Dispositif de charge et de décharge d'un milieu de stockage de chaleur thermochimique pour mettre en œuvre le procédé selon l'une des revendications 1 à 5, **caractérisé par**
au moins'un réservoir de stockage (3) destiné au milieu de stockage de chaleur déchargé (5) et au moins un autre réservoir de stockage (4) destiné au milieu de stockage de chaleur chargé (5), un réservoir de stockage (3) destiné au milieu de stockage de chaleur déchargé (5) et un réservoir de stockage (4) destiné au milieu de stockage de chaleur chargé (5) étant directement reliés l'un à l'autre par le biais de deux chemins de transport (6 et 7) séparés conçus comme des transporteurs à vis mécaniques, la charge du milieu de stockage de chaleur déchargé (5), du réservoir de stockage (3) au réservoir de stockage (4) pendant le transport le long du premier chemin de transport (6) conçu comme un transporteur à vis mécanique, étant effectuée avec le flux de chaleur (Q1) par chauffage du milieu de stockage de chaleur déchargé (5) au moyen d'une unité de chauffage électrique (10) tout en éliminant simultanément complètement le milieu réactionnel et la décharge du milieu de stockage de chaleur chargé (5), du réservoir de stockage (4) au réservoir de stockage (3) pendant le transport le long du deuxième chemin de transport (7) conçu comme un transporteur à vis mécanique, étant effectuée par ajout du milieu réactionnel libéré lors de la charge au milieu de stockage de chaleur chargé (5) avec libération simultanée du flux de chaleur (Q2).

7. Dispositif selon la revendication 6, **caractérisé en ce que** l'unité de chauffage électrique (10) est un convoyeur à vis (12) à chauffage électrique.

8. Dispositif selon la revendication 7, **caractérisé en ce que** la vis de transport à chauffage électrique (12) comporte une cartouche chauffante électrique (14) montée de manière rotative sur son axe longitudinal (13) et pourvue d'un boîtier cylindrique, au moins un élément en bande (16) qui s'étend en hélice dans la direction de l'axe longitudinal (13) étant disposé sur la surface d'enveloppe extérieure (15) du boîtier de manière à former le transporteur à vis.

9. Dispositif selon la revendication 8, **caractérisé en ce que** l'au moins un élément en bande (16) est en un matériau thermoconducteur.

10. Dispositif selon l'une des revendications 6 à 9, **caractérisé en ce que** l'un au moins des chemins de transport (6 ou 7) conçus comme des transporteurs à vis mécaniques comprend au moins deux parties de chemin de transport (6a, 6b ou 7a, 7b) conçues comme des transporteurs à vis mécanique et montées en série l'une derrière l'autre.
